# EUROPÄISCHE PATENTSCHRIFT

(11) **EP 1 744 129 B1**
(45) Veröffentlichungstag und Bekanntmachung des Hinweises auf die Patenterteilung: **27.03.2013**
(21) Anmeldenummer: 06014319.5
(22) Anmeldetag: 11.07.2006
(51) Int. Cl.: G01D 5/347, B62D 15/02, G01D 5/249

(54) **Verfahren zum Bestimmen der absoluten Winkelstellung des Lenkrades eines Kraftfahrzeugs**
Method for determining the absolute angular position of a steering wheel in a vehicle
Procédé de détermination de la position angulaire absolue d'un volant de véhicule

(30) Priorität: 14.07.2005 DE 102005032871
(43) Veröffentlichungstag der Anmeldung: 17.01.2007
(73) Patentinhaber: Leopold Kostal GmbH & Co. KG, 58507 Lüdenscheid (DE)
(72) Erfinder: Borgmann, Uwe, 45665 Recklinghausen (DE); Köster, Michael, 44265 Dortmund (DE)

(56) Entgegenhaltungen:
- DE-A1- 3 424 806
- DE-A1- 3 538 812
- DE-A1- 19 758 104
- US-A- 4 631 519
- US-A1- 2005 078 015

## Beschreibung

Die Erfindung betrifft ein Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray umfassenden Sende-Empfangseinheit sowie einem gegenüber dieser drehbar angeordneten, eine eindeutige, einspurige Codierung der Winkelwerte aufweisenden Codeträger, wobei ein zusammenhängendes Segment der Codierung auf das Sensorarray abgebildet wird, und das Ausgangssignal des Sensorarrays zur Ermittlung eines dem aktuellen Winkelwert entsprechenden Codeworts ausgewertet wird.

Die auch als Lenkwinkel bezeichnete absolute Winkelstellung des Lenkrades wird bei Kraftfahrzeugen benötigt, um mit diesem Wert etwa ein Fahrdynamikregelsystem beaufschlagen zu können. Ein solches Fahrdynamikregelsystem erhält neben dem genannten Lenkwinkelwert weitere Messdaten, etwa die Raddrehzahl oder die Drehung des Kraftfahrzeugs um seine Hochachse. Benötigt werden zum einen der absolute Lenkwinkeleinschlag und zum anderen die Lenkgeschwindigkeit, damit diese Werte zusammen mit den anderen erfassten Daten durch das Fahrdynamikregelsystem ausgewertet und zum Steuern von Aktoren, beispielsweise der Bremsen und/oder des Motormanagements umgesetzt werden können.

Aus der DE 40 22 837 A1 ist ein zur Durchführung eines solchen Verfahrens geeigneter optoelektronischer Lenkwinkelsensor bekannt. Der in diesem Dokument beschriebene Lenkwinkelsensor umfasst eine elektronische Steuereinheit sowie eine Sensoreinheit, bestehend aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluss über die tatsächliche Lenkwinkelstellung gewonnen werden. Die als Codierung eingesetzte archimedische Spirale ist kontinuierlich verlaufend ausgebildet, so dass diese als analoge Codierung angesprochen werden kann. Mit der gleichen Anordnung lässt sich aber auch ebenso gut eine digitale Codierung auf der Codescheibe auslesen.

Aus der DE 197 58 104 A1 ist ein Verfahren zur Absolutbestimmung eines Drehwinkels gemäß dem Oberbegriff des Patentanspruchs 1 bekannt. Bei diesem vorbekannten Verfahren wird das Ausgangssignal des Sensorarrays durch die Auswertung scharfer, allgemein auch als Flanken bezeichneter Signaländerungen in einen Kontrastunterschied umgewandelt. Die Kontrastunterschiede werden mittels eines Mikrocontrollers dekodiert, indem sie mit einem die Winkelinformation darstellenden Schwarz-Weiß-Muster verglichen werden.

Dieses vorbekannte Verfahren vermag zwar grundsätzlich die Aufgabe zu lösen, den gesuchten Winkelwert zu ermitteln, es reagiert jedoch sehr empfindlich auf jede Art von Signalstörungen. So können zum Beispiel Verschmutzungen des optischen Systems zusätzliche Schattenwürfe hervorrufen, welche sich ebenfalls als Flanken in dem elektrischen Ausgangssignal äußern und damit zusätzliche, nicht der Codierung entsprechende Kontrastunterschiede bewirken. Insbesondere beim Einsatz im Automobil treten auch elektromagnetische Störungen auf, die zusätzliche Flanken in dem Ausgangssignal des Sensorarrays hervorrufen. Da das Auswerteverfahren aber gerade auf der Erkennung und Auswertung solcher Flanken bzw. der aus diesen abgeleiteten Kontrastunterschiede basiert, führen solche Störimpulse zu entsprechenden Fehlmessungen. Derartige Fehlmessungen können zwar mittels entsprechend ausgestalteter Abläufe zur Plausibilitätsüberprüfung der aus ihnen resultierenden Messergebnisse erkannt werden, eine Korrektur dieser Messergebnisse ist jedoch nicht möglich.

Die DE 34 24 806 A1 zeigt eine Nivelliereinrichtung mit einem Nivelliergerät zur Ablesung eines auf einer entfernt angeordneten Messlatte aufgebrachten Strich-Codes. Der abgelesene Strich-Code wird mittels eines Kreuz-Korrelationsverfahrens mit einem Referenzcode verglichen, um daraus die Ableseposition zu ermitteln.

Die Offenlegungsschrift US 2005/0078015 A1 zeigt einen Inkremental-Encoder, bei dem ein eine regelmäßige Abfolge gleichgroßer heller und dunkler Markierungen sowie eine etwas breitere dunkle Indexmarkierung aufweisender Maßstab von einem Sensorarray abgetastet wird. In zwei parallel arbeitenden Korrelationsfiltern wird das abgelesene Muster einerseits mit dem regelmäßigen Hell-Dunkel Muster und andererseits mit einer mittig im Abtastfenster positionierten Indexmarkierung verglichen.

Ausgehend von diesem diskutierten Stand der Technik liegt der Erfindung daher die Aufgabe zugrunde, ein Verfahren der eingangs genannten Art dergestalt weiterzubilden, dass eine deutlich erhöhte Unempfindlichkeit gegen Fremdeinflüsse insbesondere durch Verschmutzungen oder elektromagnetische Störimpulse erreicht wird.

Diese Aufgabe wird erfindungsgemäß dadurch gelöst, dass in einem Korrelationsfilter aus dem Ausgangssignal des Sensorarrays und einem die gesamte Winkelinformation der Codierung darstellenden Referenz-Signal eine Korrelationsfunktion gebildet wird, dass zur Ermittlung der Position der besten Übereinstimmung von Ausgangssignal und Referenz-Signal in einem Maximalwert-Filter der Maximalwert der Korrelationsfunktion bestimmt und in einem Entscheidungsfilter mit einem festgelegten Korrelationsschwellwert verglichen wird, und dass nur beim Überschreiten des Korrelationsschwellwerts durch den Maximalwert das entsprechende Codewort für den Winkelwert als gültiger Wert markiert und als aktuelles Codewort ausgegeben wird.

Dadurch, dass bei dem erfindungsgemäßen Verfahren im Gegensatz zum vorbekannten Stand der Technik nicht nur kurze Stücke aus dem Ausgangssignal verwendet werden, sondern mehr oder weniger das gesamte Ausgangssignal gleichzeitig zur Auswertung herangezogen wird, ist gewährleistet, dass sich lokale Störungen ,wie sie etwa durch Schmutzpartikel hervorgerufen werden können, nicht so stark im Ergebnis der Auswertung niederschlagen.

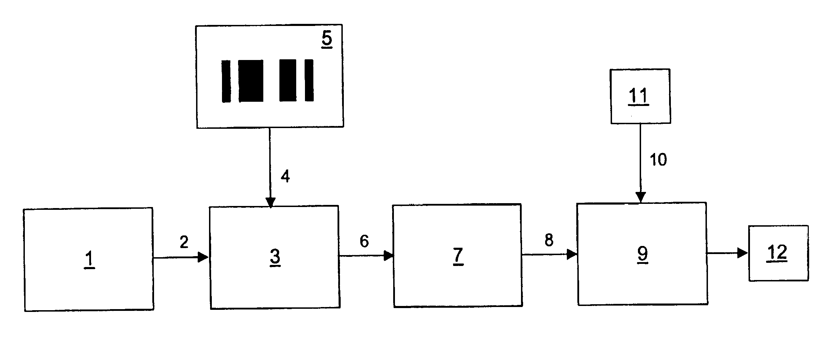

Vorteile und Ausgestaltungen der Erfindung sind Bestandteil der Unteransprüche sowie der nachfolgenden Beschreibung eines Ausführungsbeispiels unter Bezugnahme auf die beigefügte einzige Figur, welche ein Blockdiagramm des Verfahrensablaufs zeigt.

Bei dem vorliegenden Ausführungsbeispiel wird von einer Winkelsensor-Anordnung ausgegangen, bei der ein Codeträger, der eine eine digitale Codierung der Winkelwerte darstellende Codespur aufweist, gegenüber einer optoelektronischen Sende-Empfangseinheit drehbar gelagert ist. Die Codespur stellt dabei eine eindeutige Codierung der Winkelwerte von 0 bis 360° dar, und der Empfänger der Sende-Empfangseinheit wird durch einen aus einer Vielzahl von Photodioden gebildeten Zeilensensor, ein sogenanntes Photodiodenarray (PDA) gebildet. In dem vorliegenden Beispiel wird ein PDA verwendet, das 128 einzelne, auch als Pixel bezeichnete Photodioden aufweist. Dieses PDA wird durch den ihm zugeordneten Lichtsender, etwa eine Leuchtdiode (LED) durch den die Codierung enthaltenden Codeträger hindurch belichtet. Die Codierung ist dabei z.B. durch eine Abfolge lichtdurchlässiger Durchbrechungen in dem aus einem undurchsichtigen Material bestehenden Codeträger realisiert. Im Falle einer radialen Durchleuchtung dieser Codierung ist diese als umlaufende Spur auf einer Zylindermantelfläche eines entsprechenden Codeträgers realisiert, bei einer axialen Durchleuchtung als eine kreisringförmige Spur mit konstantem mittlerem Radius auf einer Codescheibe.

Durch die Durchleuchtung dieser Codierung wird auf dem PDA eine die entsprechende Winkelposition repräsentierende Lichtverteilung abgebildet.

Das durch diese Lichtverteilung hervorgerufene Ausgangssignal des PDA bildet den Ausgangspunkt des vorliegenden Verfahrens, bei dem aus diesem Ausgangssignal die zugrundeliegende Winkelinformation ermittelt wird.

Das Ausgangssignal 2 des Sensors 1, das neben der gewünschten Information auch diverse Störungen beinhalten kann, wird dazu an ein Korrelationsfilter 3 übertragen. Dieses korreliert das Signal 2 mit einem in einem Referenz-Signal-Speicher 5 abgelegten Referenz-Signal 4, das die auf dem Codeträger enthaltene Code-Information vollständig beschreibt und den Bezug von Information zum Winkelwert enthält. Die Korrelation erfolgt mathematisch durch Faltung des Ausgangssignals 2 mit dem Referenz-Signal 4. Das Resultat dieser Faltungsoperation ist eine Korrelationsfunktion 6, die das Ausgangssignal des Korrelationsfilters 3 bildet. Die Korrelationsfunktion 6 beschreibt den Grad der Übereinstimmung des Ausgangssignals 2 mit dem Referenz-Signal 4 als Funktion der Codeposition bzw. des Winkelwertes. Der maximale Wert dieser Korrelationsfunktion 6 gibt deshalb die Position der besten Übereinstimmung zwischen Ausgangssignal 2 und Referenz-Signal 4 an. In der Filterstufe 7 wird dieser Maximalwert der Korrelationsfunktion 6 ermittelt und in Verbindung mit der entsprechenden Code-Position als Wertepaar an die Entscheidungsstufe 9 übermittelt. Die Entscheidungsstufe 9 vergleicht den Maximalwert der Korrelationsfunktion mit einem Korrelationsschwellwert 10, der in einem Korrelationsschwellwert-Speicher 11 abgelegt ist. Ist der Maximalwert der Korrelationsfunktion größer als der Korrelationsschwellwert 10, so wird der entsprechende Winkelwert als gültig für die weitere Verarbeitung markiert, und an nachfolgende Steuergeräte weitergegeben.

Die Höhe des Korrelationsschwellwerts 10 wird abhängig von dem gewählten Sicherheitskonzept des gesamten Systems festgelegt. Je höher der Schwellwert ist, desto sicherer ist der mit diesem ermittelte Winkelwert. Ein zu hoher Schwellwert kann allerdings die Verfügbarkeit der Winkelsensorik beeinträchtigen, da mit wachsendem Schwellwert die Wahrscheinlichkeit ansteigt, dass dieser durch die Korrelationsfunktion nicht überschritten wird, und in diesem Falle kein gültiger Winkelwert ausgegeben wird.

Über den Korrelationsschwellwert kann so der für jeden Anwendungsfall beste Kompromiss zwischen den gegensätzlichen Anforderungen Sicherheit und Verfügbarkeit eingestellt werden. So würde z.B. bei einem Korrelationsschwellwert von 0,5 eine 50%ige Übereinstimmung von Sensorsignal und Referenz-Signal für eine sichere Bestimmung des Lenkwinkels ausreichen. Verfälschungen der Sensorinformation etwa durch Verschmutzung im optischen System oder durch elektrische Störungen in der Informationsübertragung können damit bis zu einer gewissen Grenze toleriert werden.

Die Auflösung der Winkelbestimmung ist nicht von der Auflösung der Hell/Dunkel-Information der Codespur abhängig sondern entspricht der Auflösung mit der die Korrelationsfunktion ermittelt wird. Diese wird nur durch die Rechenleistung, die dem Korrelationsfilter zur Verfügung steht, begrenzt.

## Patentansprüche

1. Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray (1) umfassenden Sende-Empfangseinheit sowie einem gegenüber dieser drehbar angeordneten, eine eindeutige einspurige Codierung der Winkelwerte aufweisenden Codeträger, wobei ein zusammenhängendes Segment der Codierung auf das Sensorarray (1) abgebildet wird, und das Ausgangssignal des Sensorarrays (1) zur Ermittlung eines dem aktuellen Winkelwert entsprechenden Codeworts ausgewertet wird, **dadurch gekennzeichnet, dass** in einem Korrelationsfilter (3) aus dem Ausgangssignal (2) des Sensorarrays (1) und einem die gesamte Winkelinformation der Codierung darstellenden Referenz-Signal (4) eine Korrelationsfunktion (6) gebildet wird, dass zur Ermittlung der Position der besten Übereinstimmung von Ausgangssignal (2) und Referenz-Signal (4) in einem Maximalwert-Filter (7) der Maximalwert (8) der Korrelationsfunktion (6) bestimmt und in einem Entscheidungsfilter (9) mit einem festgelegten Korrelationsschwellwert (10) verglichen wird, und dass nur beim Überschreiten des Korrelationsschwellwerts (10) durch den Maximalwert (8) das entsprechende Codewort für den Winkelwert als gültiger Wert markiert und als aktuelles Codewort ausgegeben wird.

2. Verfahren nach Anspruch 1, **dadurch gekennzeichnet, dass** die Bildung der Korrelationsfunktion (6) durch Faltung des Ausgangssignals (2) mit dem Referenz-Signal (4) erfolgt.

3. Verfahren nach Anspruch 1 oder 2, **dadurch gekennzeichnet, dass** der Korrelationsschwellwert (10) nach Maßgabe eines einzuhaltenden Sicherheitskonzepts auf einen Wert zwischen Null und Eins festgelegt wird.

## Claims

1. Process for the absolute determination of an angle of rotation, in particular of the angular position of the steering wheel of a motor vehicle, by means of a transmitter/receiver unit comprising a light source and a sensor array (1) featuring a plurality of optoelectronic transducer elements as well as a code carrier which is arranged in a rotational manner with respect to these and has a unique, single-track coding of the angular values, a continuous segment of the coding being imaged on the sensor array (1), and the output signal of the sensor array (1) being analysed for the purpose of establishing a code word corresponding to the current angular value, **characterised in that** in a correlation filter (3), a correlation function (6) is formed from the output signal (2) of the sensor array (1) and a reference signal (4) representing the entire angular information of the coding; that the maximum value (8) of the correlation function (6) is determined in a maximum value filter (7) and compared with a defined correlation threshold value (10) in a decision-making filter (9) so as to establish the position of the best coincidence of output signal (2) and reference signal (4), and that the corresponding code word for the angular value is only marked as the valid value and issued as the current code word if the correlation threshold value (10) is exceeded by the maximum value (8).

2. Process in accordance with Claim 1, **characterised in that** the formation of the correlation function (6) occurs by way of a convolution of the output signal (2) with the reference signal (4).

3. Process in accordance with Claim 1 or Claim 2, **characterised in that** the correlation threshold value (10) is determined at a value between zero and one in accordance with a safety concept that has to be adhered to.

## Revendications

1. Procédé pour la détermination absolue d'un angle de rotation, en particulier de la position angulaire du volant d'un véhicule automobile, au moyen d'une unité émission-réception, qui comprend une source lumineuse et un réseau de détection (1) présentant de nombreux éléments convertisseurs optoélectroniques, ainsi qu'un porteur de code, qui est agencé en pivotement par rapport à ladite unité, et qui présente une codification univoque, à piste unique des valeurs angulaires, sachant qu'une image de segment continu de la codification est formée sur le réseau de détection (1) et qu'un signal de sortie du réseau de détection (1) est évalué pour la détermination d'un mot codé, qui correspond à la valeur angulaire actuelle, **caractérisé en ce que**, dans un filtre de corrélation (3), est formée une fonction de corrélation (6) à partir du signal de sortie (2) du réseau de détection (1) et d'un signal de référence (4), qui représente l'information d'angle totale de la codification, que, pour la détermination de la position de la meilleure concordance entre le signal de sortie (2) et le signal de référence (4), la valeur maximale (8) de la fonction de corrélation (6) est déterminée dans un filtre de valeur maximale (7) et, dans un filtre de décision (9), elle est comparée avec une valeur de corrélation de seuil (10) fixée, et que le mot codé adéquat pour la valeur angulaire n'est marqué en tant que valeur validée et délivré en tant que mot codé actuel que lorsque la valeur de corrélation de seuil (10) est dépassée vers le haut par la valeur maximale (8).

2. Procédé selon la revendication 1, **caractérisé en ce que** la formation de la fonction de corrélation (6) est réalisée par la convolution du signal de sortie (2) avec le signal de référence (4).

3. Procédé selon revendication 1 ou 2, **caractérisé en ce que** la valeur de corrélation de seuil (10) est fixée à une valeur, qui, prescrite pour un concept de sécurité, est située entre zéro et un.
